# EUROPÄISCHE PATENTSCHRIFT

(11) **EP 3 331 723 B1**
(45) Veröffentlichungstag und Bekanntmachung des Hinweises auf die Patenterteilung: **16.02.2022**
(21) Anmeldenummer: 16753297.7
(22) Anmeldetag: 03.08.2016
(51) Int. Cl.: B60N 2/07

(54) **ANSCHLAG FÜR EINE SCHIENE EINES LÄNGSVERSCHIEBBAREN SITZES**
STOP FOR A RAIL OF A LONGITUDINALLY ADJUSTABLE SEAT
BUTÉE POUR UN RAIL D'UN SIÈGE RÉGLABLE EN LONGUEUR

(30) Priorität: 03.08.2015 DE 102015214775
(43) Veröffentlichungstag der Anmeldung: 13.06.2018
(73) Patentinhaber: KEIPER Seating Mechanisms Co., Ltd., Shanghai 201315 (CN)
(72) Erfinder: GORCIC, Sascha, 42897 Remscheid (DE); GOWDA, Bharath Nagesha, 51379 Leverkusen (DE)
(74) Vertreter: Liedtke & Partner Patentanwälte
(86) Internationale Anmeldenummer: PCT/EP2016/068483
(87) Internationale Veröffentlichungsnummer: WO 2017/021427

(56) Entgegenhaltungen:
- DE-A1- 19 804 506
- DE-A1-102008 012 213
- DE-U1-202009 002 972
- US-A1- 2011 240 821

## Beschreibung

Die Erfindung betrifft einen Anschlag für eine Schiene eines längsverschiebbaren Sitzes, insbesondere eines Fahrzeugsitzes und eine Schiene für einen Längsversteller mit einem solchen Anschlag.

Aus dem Stand der Technik sind Anschläge, insbesondere Endanschläge für eine Schiene eines längsverschiebbaren Sitzes bekannt, wobei der Endanschlag eine Verschiebung des Sitzes stoppt oder einen Verfahrweg verkürzt.

Des Weiteren sind aus der US 2011/240821 A1, DE 10 2008 012 213 A1 und DE 198 04 506 A1 sowie DE 20 2009 002 972 U1 Anschläge, insbesondere Endanschläge für eine Schiene eines längsverschiebbaren Sitzes bekannt. Aufgabe der vorliegenden Erfindung ist es, einen gegenüber dem Stand der Technik verbesserten Anschlag für eine Schiene eines längsverschiebbaren Fahrzeugsitzes und eine verbesserte Schiene mit einem solchen Anschlag anzugeben.

Die Aufgabe wird erfindungsgemäß mit einem Anschlag gemäß Anspruch 1 gelöst.

Hierzu weist das Anschlagelement zumindest zwei abragende Halteelemente auf, von denen einer hakenförmig abgewinkelt ist und der andere stift- oder pinförmig ausgebildet ist. Somit ist das Anschlagelement mittels einer Fixier- und Steckverbindung in eine Schiene positionier- und einsteckbar. Zur Fixierung der Steckverbindung, insbesondere des stift- oder pinförmigen

Halteelementes, ist ein flexibles Fixierelement, erfindungsgemäß eine Haltefeder, vorgesehen. Die Haltefeder kann als eine Omegafeder ausgebildet sein. Alternativ kann das stift- oder pinförmige Halteelement derart ausgebildet sein, dass sich dieses selbst form- und/oder kraftschlüssig fixiert. Hierzu ist das stift-oder pinförmige Halteelement beispielsweise aus einem flexiblen Material oder zumindest außenseitig flexibel und profiliert ausgebildet, so dass eine Steck- und Klemmverbindung ermöglicht ist.

Die mit der Erfindung erzielten Vorteile bestehen insbesondere darin, dass ein solch ausgebildeter Anschlag bei einer mechanischen Beanspruchung beispielsweise bei einem auf den Anschlag einwirkenden Schienenteil, wie eine Platte, eine Bewegung sicher gestoppt wird. Darüber hinaus kann ein solcher Anschlag variabel in die Schiene eingesetzt und fixiert werden. Hierdurch können unterschiedlich lange Verfahrwege eingestellt werden.

Der Anschlag ist insbesondere ein Endanschlag für eine Längsverstelleinrichtung und umfasst ein Anschlagelement, das variabel positionierbar ist und derart ausgeformt ist, dass es selbsttätig in einer Halteposition fixiert.

Hierzu ist das Anschlagelement in einer möglichen Ausführungsform als ein Positionier- und Fixierelement ausgebildet. Insbesondere ist das Anschlagelement als ein Steck- und Fixierelement ausgebildet. Mit anderen Worten: Das Anschlagelement ist derart ausgebildet, insbesondere geformt, dass dieses zunächst eine Vorpositionierung und anschließend eine selbsttätige Fixierung ermöglicht.

Erfindungsgemäß weist das Anschlagelement zumindest zwei abragende Halteelemente zur Vorpositionierung und Fixierung auf. Dabei ist eines der Halteelemente hakenförmig ausgebildet. Beispielsweise ragt eines der Halteelemente vom Anschlagelement ab, wobei das freie abragende Ende abgewinkelt oder gebogen ist. Das andere Halteelement ist stift- oder pinförmig ausgebildet. Beispielsweise ragt das andere Halteelement gerade vom Anschlagelement in Form eines Stiftes oder Pins ab.

In einer weiteren Ausführungsform ist mindestens eines der Halteelemente derart flexibel ausgebildet, dass eine Steck- und Klemmverbindung ermöglicht ist. Beispielsweise ist das flexible Halteelement aus einem flexiblen Material gebildet. Alternativ kann das flexible Halteelement zumindest außenseitig flexibel ausgebildet sein. Beispielsweise kann das flexible Halteelement aus zwei Materialien gebildet sein, wobei zumindest die Außenschicht aus einem flexiblen Material, insbesondere einem weichen Material, wie Gummi oder einem Kunststoff, gebildet ist. Hierdurch kann sich das Halteelement selbsttätig form- und/oder kraftschlüssig an einer Position fixieren.

Darüber hinaus kann mindestens eines der Halteelemente außenseitig profiliert ausgebildet sein. Eine solche Profilierung verbessert die selbsttätige Fixierung des Anschlags.

Zusätzlich ist erfindungsgemäß ein separates, Fixierelement vorgesehen, das form- und/oder kraftschlüssig auf den Anschlag anordenbar ist. Mittels des Fixierelementes ist der Anschlag zusätzlich zur selbsttätigen Fixierung fixiert werden.

Erfindungsgemäß ist das Fixierelement als eine Haltefeder, insbesondere eine Omegafeder, ausgebildet. Alternativ kann das Fixierelement als eine Blattfeder oder ein anderes geeignetes Element ausgebildet sein.

In einer alternative, nicht erfindungsgemäßen Ausführungsform ist das Fixierelement als ein Steckelement ausgebildet, das form- und/oder kraftschlüssig in das Anschlagelement anordenbar ist. Hierdurch ist die Montage vereinfacht. Zudem ist das Fixierelement einfach und kostengünstig herstellbar. Beispielsweise kann das Fixierelement ein Kunststoffteil, insbesondere ein Spritzgussteil sein. Zum Beispiel kann das Fixierelement aus einem thermoplastischen Elastomer, insbesondere Polypropylen oder Polyethylen gebildet sein. Alternativ kann das Fixierelement auch ein Gussteil aus einen anderen Material sein.

Darüber hinaus ist das Fixierelement irreversibel am oder im Anschlagelement, insbesondere in einer Ausnehmung des Anschlagelements irreversibel, anordenbar. Beispielsweise weist das Fixierelement mindestens eine Vertiefung und das Anschlagelement korrespondierend mindestens eine Auswölbung auf oder umgekehrt. Insbesondere weist das Fixierelement außenseitig, insbesondere stirnseitig, mindestens eine Vertiefung, insbesondere eine Kerbe, Rille oder Nut, auf. Das Anschlagelement, insbesondere die Ausnehmung des Anschlagelements, weist korrespondierend mindestens eine Auswölbung, insbesondere eine Rippe, einen Steg oder eine Sägezahnrippe, auf. Alternativ kann das Fixierelement eine Auswölbung und das Anschlagelement korrespondierend eine Vertiefung aufweisen.

Dabei kann das Fixierelement derart ausgebildet sein, dass dieses sowohl irreversibel im Anschlagelement anordenbar ist als auch selbsttätig und irreversibel das Anschlagelement in einer Halteposition fixiert.

Mittels eines solchen irreversibel im Anschlagelement gehaltenen und das Anschlagelement selbsttätig und irreversibel in einer Halteposition haltenden Fixierelement ist ein einfacher Anschlag, der variabel positioniert und fixiert werden kann, gegeben. Zudem kann der Anschlag große Kräfte aufnehmen.

Die Erfindung betrifft des Weiteren ein längsverstellbares Schienenpaar, das zumindest einen Anschlag, wie zuvor beschrieben, umfasst.

Dabei ist der Anschlag an einer Schiene des Schienenpaares variabel positionierbar und selbsttätig fixierbar anordenbar. Somit ist eine Montage vereinfacht. Zudem kann ein solcher Anschlag bei bestehenden Längsverstelleinrichtungen mit Schienenpaaren einfach nachgerüstet werden.

In einer möglichen Ausführungsform bildet der Anschlag einen Endanschlag. Dabei kann der Anschlag in einem Innenraum zwischen den Schienen des Schienenpaares lösbar anordenbar sein.

Zur Vorpositionierung und selbsttätigen Fixierung greifen zumindest zwei Halteelemente des Anschlags horizontal in die Schienen ein. Dabei kann eines der Halteelemente einen längeren Eingriff als das andere Halteelement aufweisen. Hierdurch ist der Anschlag als ein kombiniertes Positionier- und Fixierelement ausgebildet, wobei eines der Halteelemente der Positionierung, insbesondere einer Vorpositionierung dient und das andere Halteelement eine Fixierung, insbesondere eine selbsttätige Fixierung bewirkt.

Die Erfindung betrifft des Weiteren zumindest eine Längsverstelleinrichtung mit mindestens zwei Schienenpaaren, von denen jedes Schienenpaar zumindest einen von dem zuvor beschriebenen Anschlag umfasst.

Ausführungsbeispiele der Erfindung werden anhand von Zeichnungen näher erläutert. Dabei zeigen:
- Figur 1: schematisch in Seitenansicht einen Fahrzeugsitz, umfassend zumindest ein Schienenpaar,
- Figur 2: schematisch im Querschnitt ein Ausführungsbeispiel eines Schienenpaares mit einem in einer unteren Schiene positionierten und fixierten Anschlag,
- Figur 3: schematisch im Längsschnitt ein Ausführungsbeispiel für ein Schienenpaar mit einem in einer unteren Schiene positionierten Anschlag,
- Figur 4: schematisch in Draufsicht ein Ausführungsbeispiel für einen in einer unteren Schiene positionieren Anschlag,
- Figur 5: schematisch im Querschnitt ein weiteres Ausführungsbeispiel eines Schienenpaares mit einem in einer unteren Schiene positionierten Anschlag,
- Figuren 6 bis 8: schematisch verschiedene Darstellungen für ein weiteres Ausführungsbeispiel für ein Schienenpaar mit einem in einer unteren Schiene positionierten Anschlag,
- Figuren 9 bis 12: schematisch verschiedene Darstellungen für ein Ausführungsbeispiel eines Anschlags mit separaten Fixierelements, und
- Figuren 13 bis 18: schematisch verschiedene Darstellungen eines alternativen Ausführungsbeispiels für einen Anschlag mit einem separaten Fixierelement.

Einander entsprechende Teile sind in allen Figuren mit den gleichen Bezugszeichen versehen.

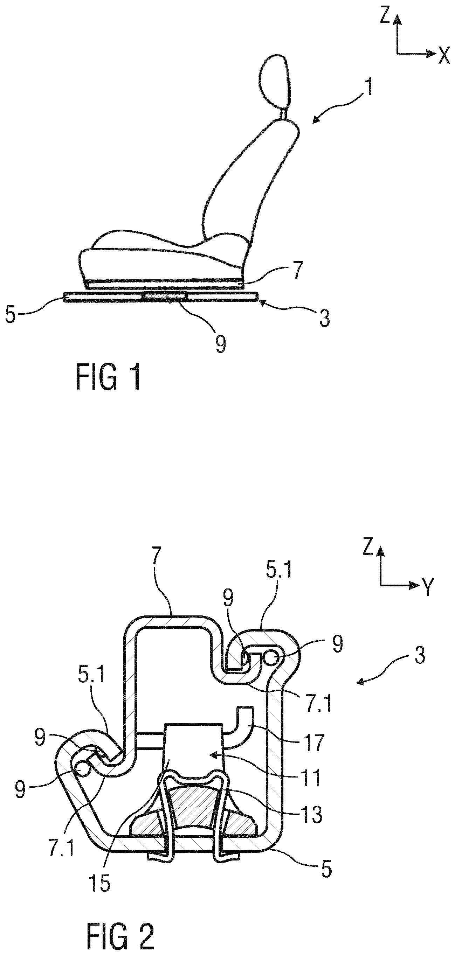

**Figur 1** zeigt in Seitenansicht ein mögliches Ausführungsbeispiel eines als Fahrzeugsitz 1 ausgebildeten Sitzes, umfassend zumindest eine Längsverstelleinrichtung mit einem Schienenpaar 3. Üblicherweise umfasst die Längsverstelleinrichtung zwei parallel zueinander angeordnete Schienenpaare 3, die zur Verstellung des Fahrzeugsitzes 1 synchron verstellt werden. Nachfolgend ist die Erfindung anhand eines der Schienenpaare 3 näher beschrieben, wobei die Erfindung bei beiden Schienenpaaren 3 zur Anwendung kommt.

Eine Anordnung des Fahrzeugsitzes 1 im Fahrzeug wird dabei anhand des nachfolgend verwendeten Koordinatensystems definiert, umfassend eine einer Hochrichtung des Fahrzeugs zugeordneten Hochachse Z eine einer Längsrichtung des Fahrzeugs zugeordneten Längsachse X und eine einer Querrichtung des Fahrzeugs zugeordneten Querachse Y.

Das Schienenpaar 3 ist zur Längsverschiebbarkeit des Fahrzeugsitzes 1 vorgesehen und umfasst eine untere Schiene 5 und eine gegenüber der unteren Schiene 5 in Längsrichtung verschiebbare obere Schiene 7, welche am Fahrzeugsitz 1 angeordnet ist.

Die untere Schiene 5 ist dabei fahrzeugfest an einer Fahrzeugstruktur, beispielweise an einem Fahrzeugboden, angeordnet und weist in einem vorgegebenen Bereich in Längsrichtung ein die obere Schiene 7 lagerndes Lagerelement 9 auf.

Das Lagerelement 9 ist beispielsweise ein mehrere Kugeln umfassender Kugelkäfig, welcher mittels der Kugeln die obere Schiene 7 abstützt und die Längsverschiebbarkeit sicherstellt.

**Figur 2** zeigt im Querschnitt das Schienenpaar 3, umfassend die untere Schiene 5, die obere Schiene 7 und das Lagerelement 9.

Die untere Schiene 5 umfasst beispielsweise vier als Lagerelemente 9 ausgebildete Kugelkäfige, oder auch als Laufkäfige bezeichnet, mittels welchen die obere Schiene 7 auf vier Laufbahnen oder Abstützungen längsverschieblich gelagert ist. Alternativ können auch andere geeignete Formen oder Elemente als Lagerelemente 9 zum Einsatz kommen.

Die untere Schiene 5 und die obere Schiene 7 umgreifen sich dabei gegenseitig mit ihren im Wesentlichen U-förmigen Profilen mit nach innen bzw. nach außen gebogenen Längsenden 5.1, 7.1.

In der unteren Schiene 5 ist ein Anschlag 11 für eine Stiftführungsplatte 17 positioniert und mittels eines Fixierelementes 13 an dieser gehalten und fixiert. Dabei kann das Fixierelement 13 optional vorgesehen sein. Der Anschlag 11 ist insbesondere derart ausgebildet, dass dieser selbst an der unteren Schiene 5 variabel positionierbar und an dieser selbsttätig fixierbar ist.

Hierzu umfasst der Anschlag 11 ein Anschlagelement 15.

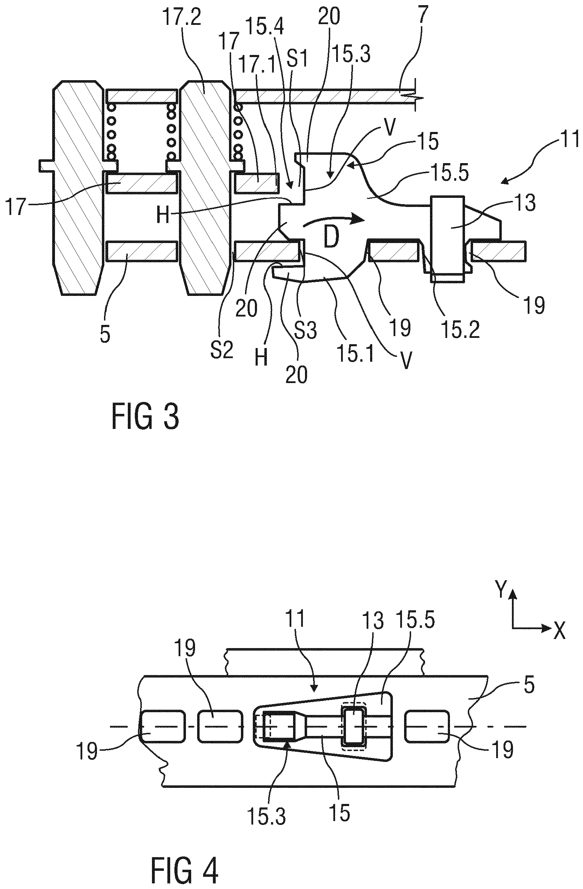

**Figur 3** zeigt im Längsschnitt das Schienenpaar 3 mit dem in der unteren Schiene 5 positionierten Anschlag 11 und das Anschlagelement 15 im Detail. Das Anschlagelement 15 ist derart ausgebildet, dass es variabel an der unteren Schiene 5 positionierbar und selbsttätig fixierbar ist.

Hierzu weist das Anschlagelement 15 zumindest zwei abragende Halteelemente 15.1, 15.2 auf, von denen eines hakenförmig abgewinkelt ist und das andere stift- oder pinförmig ausgebildet ist.

Hierdurch ist das Anschlagelement 15 mittels einer Positionier- und Fixierverbindung in der unteren Schiene 5 positionier- und fixierbar, insbesondere selbsttätig fixierend einsteckbar.

Zur optionalen oder zusätzlichen Fixierung der selbsttätig fixierbaren Steckverbindung des Anschlags 11, insbesondere dessen stift- oder pinförmigen Halteelementes 15.2, ist das flexible Fixierelement 13 vorgesehen. Das flexible Fixierelement 13 ist beispielsweise als eine Haltefeder ausgebildet. Die Haltefeder ist beispielsweise eine Omegafeder.

In einer möglichen Ausführungsform kann das stift- oder pinförmige Halteelement 15.2 derart ausgebildet sein, dass sich dieses selbst form- und/oder kraftschlüssig fixiert. Hierzu ist das stift- oder pinförmige Halteelement 15.2 beispielsweise aus einem flexiblen Material oder zumindest außenseitig flexibel und profiliert ausgebildet, so dass eine Steck- und Klemmverbindung des Anschlags 11 am Schienenpaar 3, insbesondere an der unteren Schiene 5, ermöglicht ist.

Mit anderen Worten: Der variabel positionierbare Anschlag 11 ist als ein zusätzliches geometrisches Bauteil oder ein flexibler Endstopp in einer der Schienen 5 oder 7 des Schienenpaares 3 variabel positionierbar und selbsttätig fixierbar. Dabei kann sich der Anschlag 11 selbst fixieren oder durch zusätzliche Verbindungsmittel, wie dem flexiblen Fixierelement 13, am Schienenpaar 3 gehalten und fixiert werden.

Das flexible Fixierelement 13, beispielsweise eine Klemmfeder, ist senkrecht von oben oder von unten im Bereich des pinförmigen Halteelements 15.2 auf den Anschlag 11 steckbar und an der unteren Schiene 5 fixierbar, insbesondere klemmbar.

Hierdurch ist es möglich an bestehende Schienenprofile mit feststehenden Schienenanschlagenden, den bestehenden Verfahrweg durch nachträgliches Positionieren und Fixieren des erfindungsgemäßen Anschlags 11 zu begrenzen. Dabei kann der Anschlag 11 durch entsprechendes variables Positionieren an einer der Schienen 5 oder 7 den Verfahrweg nach vorne oder nach hinten verkürzen.

Der Anschlag 11 ist darüber hinaus zumindest im Anschlagbereich 15.3 aus einem festen Material, insbesondere aus Metall gebildet. Im Bereich der Steckverbindung kann er aus einem flexiblen Material gebildet sein.

Der Anschlag 11 ist derart gestaltet und geformt, dass bei einem Lasteinfall, beispielsweise durch eine Stiftführungsplatte 17, der Anschlagbereich 15.3 als Endstopper und damit Verfahrwegverkürzung genutzt werden kann.

Der Anschlagbereich 15.3 weist eine Anschlagfläche 15.4 auf. Darüber hinaus kann die Anschlagfläche 15.4 stirnseitig profiliert ausgebildet sein, so dass vertikale Anlageflächen V und horizontale Anlageflächen H gebildet sind. Beispielsweise weist die Anschlagfläche 15.4 von dieser abragende Stege 20 auf. Dabei können die Stege 20 unterschiedlich lang ausgeformt sein, um zusätzlich eine Steckverbindung zu bilden. Auch können die Stege 20 mit einer Kontur oder Schräge versehen sein, um beispielsweise ein Positionieren, insbesondere ein Einstecken, des Anschlags 11 zu unterstützen und/oder eine Krafteinleitung bei Lasteinfall zu verbessern.

Insbesondere korrespondiert die Anschlagfläche 15.4 mit einer Stirnanlagefläche 17.1 der Stiftführungsplatte 17. Hierdurch werden die auftretenden Kräfte auf die gesamte Stirnanlagefläche 17.1 der Stiftführungsplatte 17 zur Anschlagfläche 15.4 verteilt. Bei einem Lasteinfall auf die Anschlagfläche 15.4 durch die Stiftführungsplatte 17 entsteht ein Drehmoment D, eingeleitet an Kontaktstellen S1 durch die Profilierung der Stirnanlagefläche 17.1 der Stiftführungsplatte 17.

**Figur 4** zeigt den Anschlag 11 in Draufsicht. Dabei weist der Anschlag 11 weg von der stirnseitigen Anschlagfläche 15.4 vergrößerte Abmessungen auf.

Der Anschlag 11 nimmt durch das vordere Halteelement 15.1, beispielsweise einen vorderen Haken, und einer hinteren großen Aufnahmefläche 15.5 das im Lasteinfall wirkende Drehmoment D in der unteren Schiene 5 auf und wirkt als ein Endanschlag und ermöglicht eine verbesserte Krafteinleitung.

Zusätzlich wirkt, wie in Figur 3 gezeigt, im Lastfall beim auftretenden Drehmoment D ein Stift 17.2 der Stiftführungsplatte 17 direkt an einer weiteren Kontaktstelle S2 in die untere Schiene 5 ein. Somit wirkt im Lastfall das eintretende Drehmoment D über die untere Schiene 5 an zumindest einer weiteren Kontaktstelle S2 zusätzlich auf den Anschlag 11 an der Kontaktstelle S3 ein und unterstützt somit die vertikale Anschlagfläche 15.4 im Bereich der Kontaktstelle S1.

Das Drehmoment D wirkt zusätzlich im Bereich der zwei im Formschluss an der unteren Schiene 5 gehaltenen Halteelemente 15.1, 15.2, die in Fixierungsöffnungen 19, zum Beispiel Lochausstanzungen, in der unteren Schiene 5 positioniert und gehalten sind, um im Lastfall der Lastaufnahme zu dienen.

Der Anschlag 11, insbesondere der Anschlagbereich 15.3, weist darüber hinaus in Richtung der stirnseitigen Anschlagfläche 15.4 eine zunehmende Höhe auf.

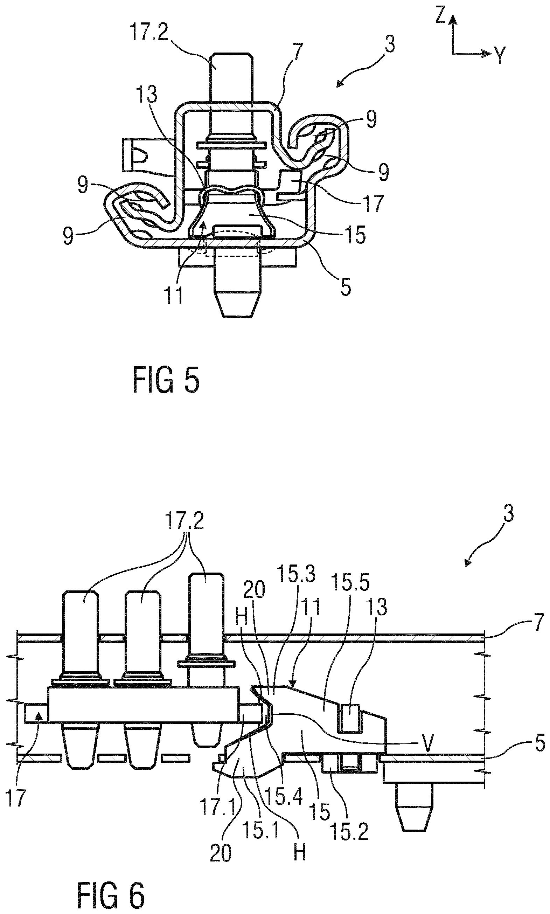

**Figur 5** zeigt schematisch im Querschnitt ein weiteres Ausführungsbeispiel eines Schienenpaares 3 mit einem in einer unteren Schiene 5 positionierten Anschlag 11.

**Figur 6** zeigt schematisch im Längsschnitt das Schienenpaar 3 gemäß Figur 5. Der Anschlag 11 ist dabei derart ausgebildet, dass er variabel an einer Halteposition positionier- und selbsttätig fixierbar ist. Bevorzug ist der Anschlag 11 im Innenraum des Schienenpaares 3 variabel an einer Halteposition einsetzbar. Beispielsweise wird der Anschlag 11 an der unteren Schiene 5 positioniert und selbsttätig fixiert.

Die Stege 20 sind mit einer ansteigenden Kontur, insbesondere einer ansteigenden Schräge, versehen, um ein Positionieren, insbesondere ein Einstecken, des Anschlags 11 im Schienenpaar 3 zu unterstützen und eine Krafteinleitung bei Lasteinfall zu verbessern.

Dabei korrespondiert die Anschlagfläche 15.4 mit einer Stirnanlagefläche 17.1 der Stiftführungsplatte 17. Hierdurch werden die auftretenden Kräfte auf die gesamte Stirnanlagefläche 17.1 der Stiftführungsplatte 17 zur Anschlagfläche 15.4 verteilt. Bei einem Lasteinfall auf die Anschlagfläche 15.4 durch die Stiftführungsplatte 17 entsteht ein Drehmoment D, eingeleitet an Kontaktstellen S1 durch die Profilierung der Stirnanlagefläche 17.1 der Stiftführungsplatte 17.

Darüber hinaus weist der Anschlag 11 weg von der stirnseitigen Anschlagfläche 15.4 vergrößerte Abmessungen auf.

Der Anschlag 11 nimmt durch das vordere Halteelement 15.1, beispielsweise einen vorderen Haken, und einer hinteren großen Aufnahmefläche 15.5 das im Lasteinfall wirkende Drehmoment D in der unteren Schiene 5 auf und wirkt als ein Endanschlag und ermöglicht eine verbesserte Krafteinleitung.

Zusätzlich wirkt im Lastfall beim auftretenden Drehmoment D der Stift 17.2 der Stiftführungsplatte 17 direkt in die untere Schiene 5 ein, so dass im Lastfall das eintretende Drehmoment D über die untere Schiene 5 zusätzlich auf den Anschlag 11 einwirkt.

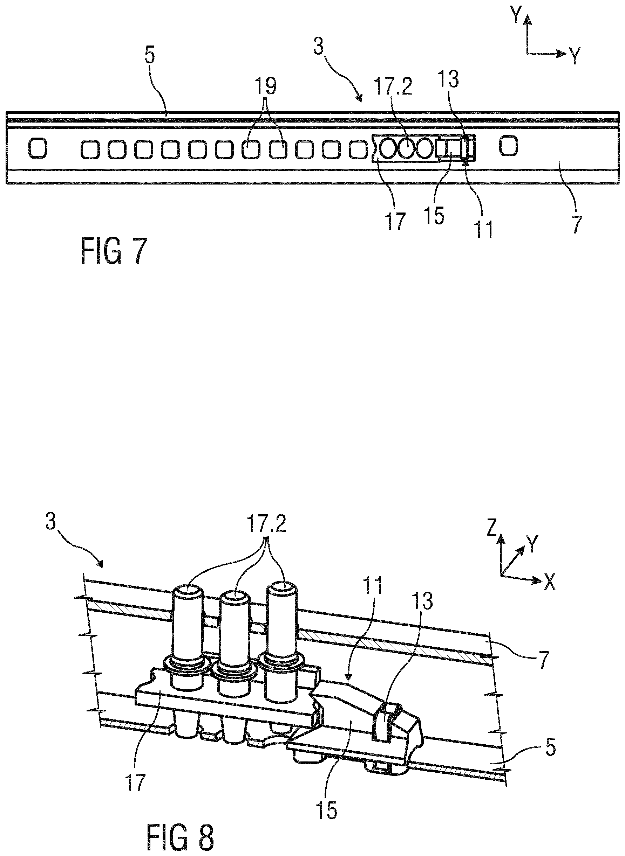

**Figur 7** zeigt das Schienenpaar 3 in Draufsicht mit teilweise ausgeschnittener oberen Schiene 7 zur Darstellung des in der unteren Schiene 5 fixierten Anschlags 11. Dabei ist der Anschlag 11 zusätzlich mittels des separaten Fixierelements 13 am Schienenpaar 3 lösbar befestigt.

**Figur 8** zeigt das Schienenpaar 3 in perspektivischer Darstellung, wobei der Anschlag 11 mittels eines als Omegafeder ausgebildeten Fixierelements 13 zusätzlich am Schienenpaar 3 lösbar befestigt ist.

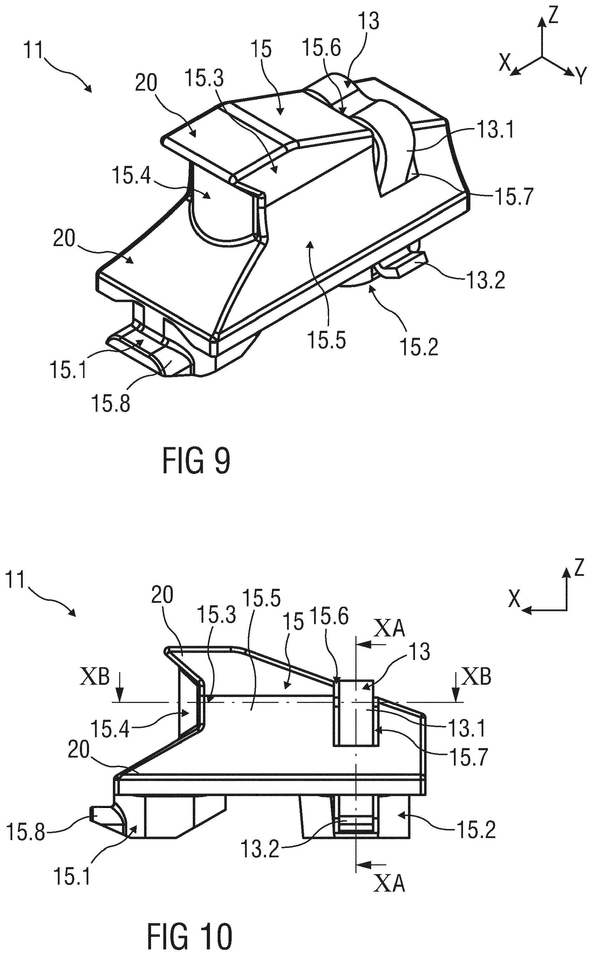

**Figuren 9 bis 12** zeigen schematisch verschiedene Darstellungen für ein Ausführungsbeispiel des Anschlags 11 mit einem separaten Fixierelement 13. Dabei weist der Anschlag 11 eine Aufnahme 15.6 auf, in welche das Fixierelement 13 einsteckbar und form- oder kraftschlüssig haltbar ist. Die Aufnahme 15.6 umfasst zwei Ausnehmungen 15.7, in welche Federarme 13.1 des Fixierelements 13 geführt und gehalten sind. Die freien Enden 13.2 der Federarme 13.1 sind nach außen abgewinkelt, so dass diese Enden 13.2 im eingebauten Zustand am Schienenpaar 3 rastend eingreifen.

Dabei ist das Fixierelement 13 derart ausgebildet, dass dieses das Anschlagelement 15 reversibel lösbar am Schienenpaar 3 hält.

Das vordere Halteelement 15.1 des Anschlagelements 15 ist hakenförmig ausgebildet und umfasst ein nach vorne von der Anschlagfläche 15.4 abstehenden Haken 15.8. Mittels des Hakens 15.8 kann das Anschlagelement 15 am Schienenpaar 3 vorpositioniert und form- und/oder kraftschlüssig gehalten werden.

Je nach Anordnung des Anschlags 11 am Schienenpaar 3 und in Abhängigkeit von den an dieser Halteposition wirkenden Kräften beim Anschlag einer der Schienen 5, 7 am Anschlag 11 bei einer Längsverstellung kann das zusätzliche Fixierelement 13 entfallen oder vorgesehen sein. Beispielsweise kann das Fixierelement 13 bei einem als vorderer Endanschlag vorgesehenen Anschlag 11 entfallen. Hingegen bei einem als hinterer Endanschlag vorgesehenen Anschlag 11 ist dieser zusätzlich mittels des Fixierelements 13 am Schienenpaar 3, insbesondere an der unteren Schiene 5, gehalten.

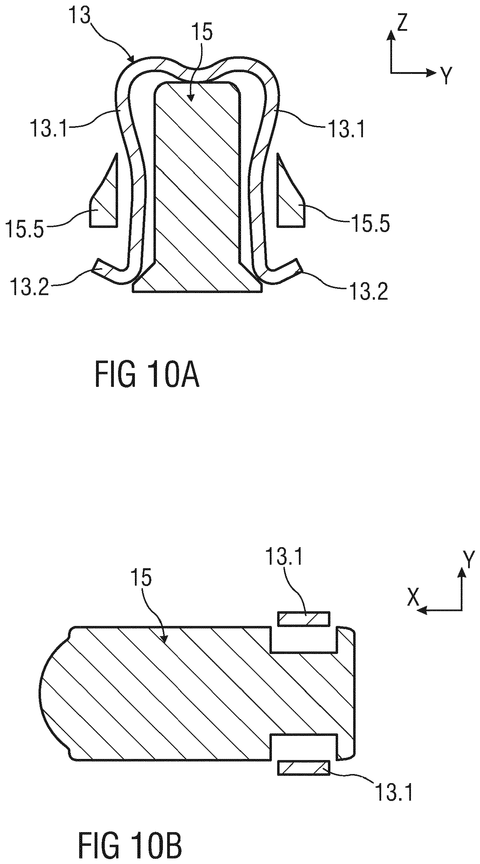

**Figur 10A** zeigt den Anschlag 11 mit dem in der Aufnahme 15.6 angeordneten Fixierelement 13 in einer Schnittdarstellung. Das Fixierelement 13 ist in dieser Ausführungsform als eine Omegafeder ausgebildet. Beispielsweise kann das Fixierelement 13 eine Metallfeder sein und u-förmig mit seitlichen Federarmen 13.1 ausgebildet sein.

**Figur 10B** zeigt im Schnitt XB den Anschlag 11 mit dem Anschlagelement 15 und den seitlichen Federarmen 13.1 des Fixierelements.

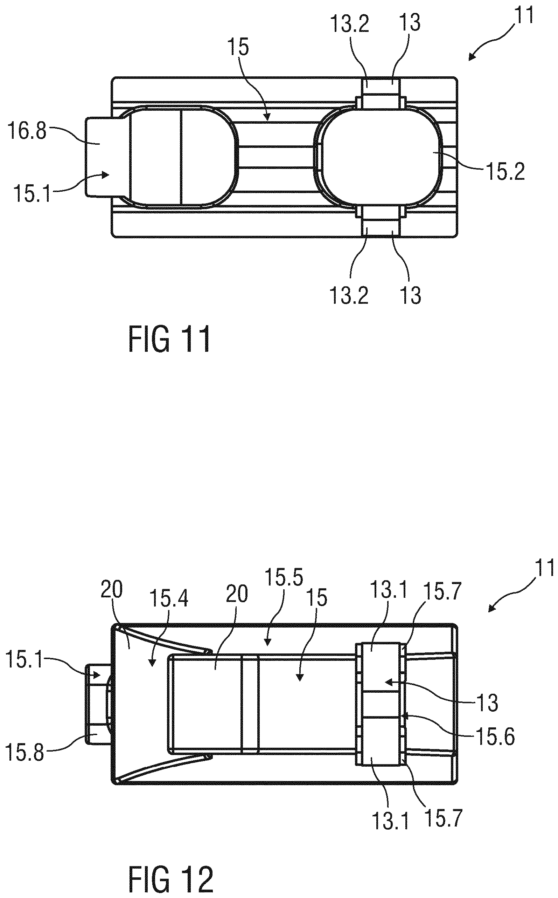

**Figur 11** zeigt den Anschlag 11 in einer Ansicht von unten mit dem Anschlagelement 15 und dem nach vorne abstehenden Haken 15.8 zur Positionierung und Befestigung des Anschlags 11 selbst und dem weiteren pinförmigen oder stiftförmigen Halteelement 15.2 des Anschlags 11 und den seitlich von diesem abstehenden freien Enden 13.2 des zusätzlichen Fixierelements 13 zur zusätzlichen Befestigung des Anschlags 11 am Schienenpaar 3, insbesondere an der unteren Schiene 5.

**Figur 12** zeigt den Anschlag 11 in Draufsicht von oben mit dem zusätzlichen Fixierelement 13, welches in der Aufnahme 15.6 angeordnet ist, wobei die Federarme 13.1 in den Ausnehmungen 15.7 geführt und gehalten sind.

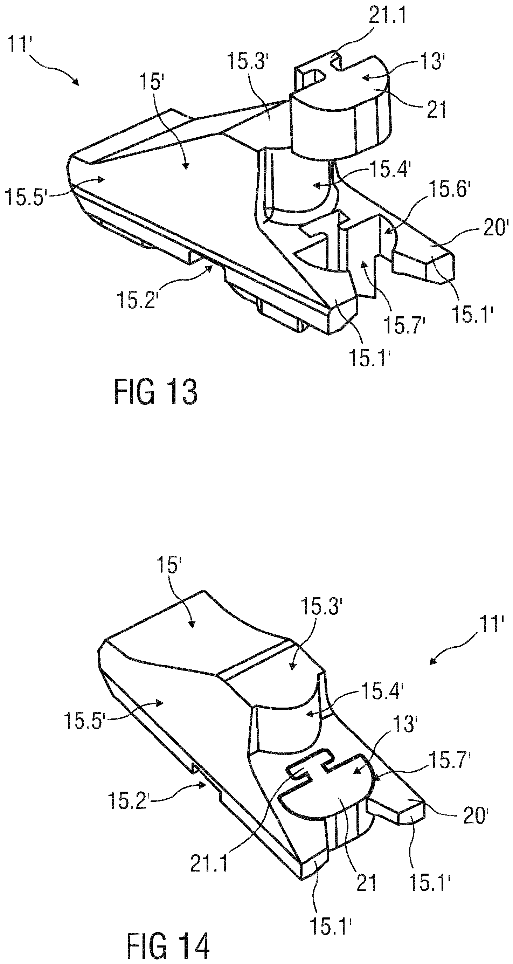

**Figuren 13 bis 18** zeigen schematisch verschiedene Darstellungen eines alternativen Ausführungsbeispiels für einen Anschlag 11' mit einem separaten Fixierelement 13'.

In der alternativen, nicht erfindungsgemäßen Ausführungsform ist das Fixierelement 13' als ein Steckelement 21 ausgebildet, das form- und/oder kraftschlüssig in das Anschlagelement 15' anordenbar ist.

In dieser einfachen Ausführungsform kann das Fixierelement 13' ein Kunststoffteil, insbesondere ein Spritzgussteil, sein. Zum Beispiel kann das Fixierelement 13' aus einem thermoplastischen Elastomer, insbesondere Polypropylen oder Polyethylen gebildet sein. Dabei können das Anschlagelement 15' und das Fixierelement 13' aus dem gleichen Kunststoffmaterial gebildet sein. Alternativ kann das Anschlagelement 15' aus einem festeren Kunststoffmaterial gebildet sein als das Fixierelement 13'.

Darüber hinaus ist das Fixierelement 13' irreversibel am oder im Anschlagelement 15' anordenbar. Hierzu weist das Anschlagelement 15' beispielsweise eine Aufnahme 15.6' auf. Die Aufnahme 15.6' ist als eine Ausnehmung 15.7' ausgebildet, deren Kontur mit der Kontur des Fixierelements 13' korrespondiert. Beispielsweise ist das Fixierelement 13' als Steckelement 21 mit einem von diesem abstehenden Steg 21.1, insbesondere einem T-förmigen Steg 21.1 ausgebildet. Korrespondierend zu diesem T-förmigen Steg 21.1 weist die Aufnahme 15.6' eine entsprechend T-förmige Ausnehmung 15.7' auf.

Dabei ist das Fixierelement 13' derart ausgebildet, dass dieses irreversibel im Anschlagelement 15', insbesondere in der Ausnehmung 15.7' anordenbar ist.

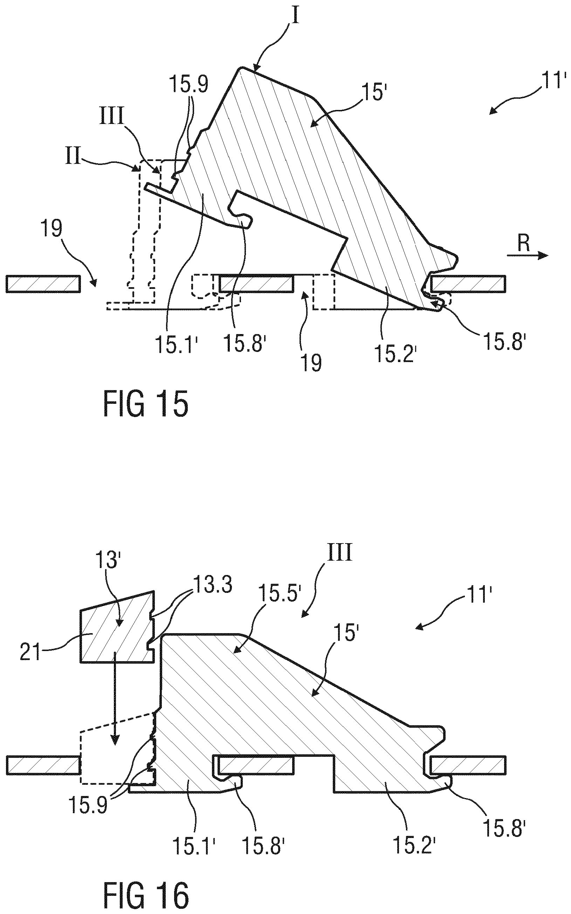

**Figur 15** zeigt das Einsetzen des alternativen Anschlags 11' in ein Schienenpaar 3', insbesondere in die untere Schiene 5'. Dabei wird zunächst das Anschlagelement 15', wie in einer Position I gezeigt, mit dem hinteren Halteelement 15.2' in eine Öffnung 19' der unteren Schiene 5' steckbar ist. Das Halteelement 15.2' weist einen abstehenden Haken 15.8' auf, der die untere Schiene 5' nach einem Verschieben von einer Zwischenposition II in eine Halteposition III in Längsrichtung R untergreift.

Auch das Halteelement 15.1' weist einen abstehenden Haken 15.8' auf, der im verschobenen Endzustand in der Halteposition III des Anschlags 11' diesen Anschlag 11' an der unteren Schiene 5' hält.

**Figur 16** zeigt den Anschlag 11' in der Halteposition III.

Bei einer Verwendung des Anschlags 11' beispielsweise als ein Endanschlag kann der Anschlag 11' zusätzlich mit einem Fixierelement 13' versehen sein.

Das Fixierelement 13' ist vorliegend ein Steckelement 21, dass, nachdem der Anschlag 11' in der Halteposition III an der unteren Schiene 5' gehalten ist, von oben in den Anschlag 11', insbesondere in dessen Aufnahme 15.6' gesteckt wird. Dabei ist das Steckelement 21 sowohl in der Aufnahme 15.6' als auch in der Öffnung 19' der unteren Schiene 5' form- und/oder kraftschlüssig angeordnet und gehalten.

Das Fixierelement 13' ist derart ausgebildet, dass es in der Aufnahme 15.6' und in der Öffnung 19' irreversibel gehalten ist. Beispielsweise weist das Fixierelement 13' hierzu mindestens eine Vertiefung 13.3 und das Anschlagelement 15' korrespondierend mindestens eine Auswölbung 15.9 auf oder umgekehrt.

Insbesondere weist das Fixierelement 13' außenseitig, insbesondere stirnseitig, als Vertiefung 13.3 insbesondere eine Kerbe, Rille oder Nut auf. Das Anschlagelement 15', insbesondere die Ausnehmung 15.7' des Anschlagelements 15', weist korrespondierend die mindestens eine Auswölbung 15.9, beispielsweise eine Rippe, einen Steg oder eine Sägezahnrippe, auf. Alternativ kann das Fixierelement 13' eine Auswölbung und das Anschlagelement 15' korrespondierend eine Vertiefung aufweisen.

Dabei kann das Fixierelement 13' derart ausgebildet sein, dass dieses sowohl irreversibel im Anschlagelement 15' anordenbar ist als auch selbsttätig und irreversibel das Anschlagelement 15' in der Halteposition III fixiert. Mittels eines solchen irreversibel im Anschlagelement 15' gehaltenen und das Anschlagelement 15' selbsttätig und irreversibel in der Halteposition III haltenden Fixierelement 13' ist ein einfacher Anschlag, der variabel positioniert und fixiert werden kann, gegeben.

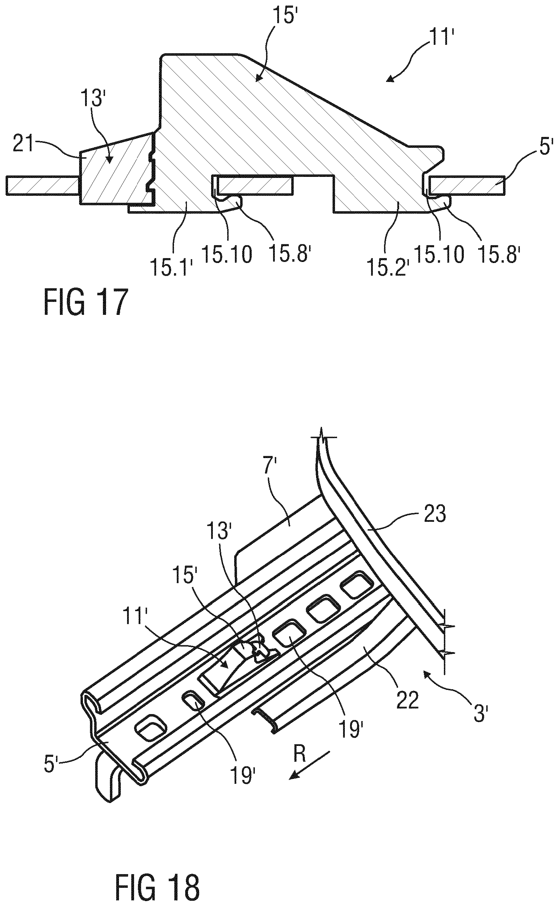

**Figur 17** zeigt den Anschlag 11' in der Halteposition III mit eingesetzten und irreversibel befestigten Fixierelement 13'. Dabei umgreift das Anschlagelement 15' die untere Schiene 5' u-förmig. Hierzu weist das Anschlagelement 15' an den Halteelementen 15.1', 15.2' die abstehenden Haken 15.8' auf. Durch zusätzliche Aussparungen 15.10 in den Halteelementen 15.1', 15.2' umgreift das Anschlagelement 15' in den Öffnungen 19' die untere Schiene 5' u-förmig.

**Figur 18** zeigt den Anschlag 11' als ein vorderer Endanschlag, der in einer der Öffnungen 19' eingesetzt und fixiert ist. Mittels eines Betätigungshebels 22 kann ein Sitz 23 beim Fahren nach vorne in Längsrichtung R am Anschlag 11' gestoppt werden.

### Bezugszeichenliste

- 1: Fahrzeugsitz
- 3,3': Schienenpaar
- 5, 5': untere Schiene
- 5.1: Längsende
- 7: obere Schiene
- 7.1: Längsende
- 9: Lagerelement
- 11, 11': Anschlag
- 13, 13': Fixierelement
- 13.1: Federarme
- 13.2: freies Ende
- 13.3: Vertiefung
- 15, 15': Anschlagelement
- 15.1, 15.1', 15.2, 15.2': Halteelement
- 15.3, 15.3': Anschlagbereich
- 15.4, 15.4': Anschlagfläche
- 15.5, 15.5': Aufnahmefläche
- 15.6, 15.6': Aufnahme
- 15.7, 15.7': Ausnehmung
- 15.8, 15.8': Haken
- 15.9: Auswölbung
- 15.10: Aussparung
- 17: Stiftführungsplatte
- 17.1: Stirnanlagefläche
- 17.2: Stift
- 19, 19': Fixierungsöffnungen
- 20: Steg
- 21: Steckelement
- 21.1: Steg
- 22: Betätigungshebel
- 23: Sitz

- S1-S3: Kontaktstellen
- D: Drehmoment
- H: horizontale Anlagefläche
- R: Längsrichtung
- V: vertikale Anlagefläche
- X: Längsachse
- Y: Querachse
- Z: Hochachse
- I: Position
- II: Zwischenposition
- III: Halteposition

## Patentansprüche

1. Anschlag (11, 11'), insbesondere Endanschlag für eine Längsverstelleinrichtung, umfassend ein Anschlagelement (15, 15'), das variabel positionierbar ist und derart ausgebildet ist, dass es selbsttätig in einer Halteposition fixiert, wobei
- das Anschlagelement (15, 15') als ein kombiniertes Positionier- und Fixierelement ausgebildet ist,
- das Anschlagelement (15, 15') zumindest zwei abragende Halteelemente (15.1, 15.2, 15.1', 15.2') zur Vorpositionierung und selbsttätigen Fixierung in der Halteposition umfasst, und
- ein separates Fixierelement (13, 13') vorgesehen ist, das das Anschlagelement (15, 15') zusätzlich zur selbsttätigen Fixierung in der Halteposition fixiert, wobei das Fixierelement (13) als eine Haltefeder ausgebildet ist.

2. Anschlag (11, 11') nach Anspruch 1, wobei zumindest eines der Halteelemente (15.1, 15.2, 15.1', 15.2') hakenförmig abgewinkelt ist und das andere stift- oder pinförmig ausgebildet ist.

3. Anschlag (11, 11') nach einem der vorhergehenden Ansprüche, wobei mindestens eines der Halteelemente (15.1, 15.2, 15.1', 15.2') derart flexibel ausgebildet ist, dass eine Steck- und Klemmverbindung ermöglicht ist.

4. Anschlag (11, 11') nach Anspruch 3, wobei das flexible Halteelement (15.1, 15.2) aus einem flexiblen Material gebildet ist.

5. Anschlag (11, 11') nach Anspruch 3, wobei das flexible Halteelement (15.1, 15.2, 15.1', 15.2') zumindest außenseitig flexibel ausgebildet ist.

6. Anschlag (11, 11') nach einem der vorhergehenden Ansprüche, wobei mindestens eines der Halteelemente (15.1, 15.2, 15.1', 15.2') außenseitig profiliert ausgebildet ist.

7. Anschlag (11) nach einem der vorhergehenden Ansprüche, wobei das Fixierelement (13) als eine Omegafeder ausgebildet ist.

8. Anschlag (11, 11') nach einem der vorhergehenden Ansprüche 1 bis 7, wobei das Fixierelement (13') in einer Aufnahme (15.6') des Anschlagelements (15') irreversibel anordenbar ist.

9. Anschlag (11, 11') nach einem der vorhergehenden Ansprüche, wobei das Fixierelement (13') mindestens eine Vertiefung (13.3) und das Anschlagelement (15') korrespondierend mindestens eine Auswölbung (15.9) aufweisen oder umgekehrt.

10. Längsverstellbares Schienenpaar (3, 3'), umfassend zumindest einen Anschlag (11, 11') nach einem der Ansprüche 1 bis 9.

11. Schienenpaar (3, 3') nach Anspruch 10, wobei der Anschlag (11) an einer Schiene (5, 5', 7, 7') des Schienenpaares (3, 3') positionier- und selbsttätig fixierbar anordenbar ist, wobei Halteelemente (15.1, 15.2, 15.1', 15.2') des Anschlags (11) zur Vorpositionierung und selbsttätigen Fixierung des Anschlags (11) horizontal in die Schiene (5, 5') eingreifen.

12. Schienenpaar (3, 3') nach Anspruch 10 oder 11, wobei der Anschlag (11, 11') in einem Innenraum zwischen den Schienen (5, 5', 7, 7') des Schienenpaares (3, 3') lösbar anordenbar ist.

## Claims

1. Stop (11, 11'), in particular end stop, for a longitudinal adjustment device, comprising a stop element (15, 15') which is variably positionable and is designed in such a manner that it automatically fixes in a holding position, wherein
- the stop element (15, 15') is designed as a combined positioning and fixing element,
- the stop element (15, 15') comprises at least two protruding holding elements (15.1, 15.2, 15.1', 15.2') for pre-positioning and automatic fixing in the holding position, and
- a separate fixing element (13, 13') is provided, which fixes the stop element (15, 15') in addition to the automatic fixing in the holding position, wherein the fixing element (13) is designed as a holding spring.

2. Stop (11, 11') according to Claim 1, wherein at least one of the holding elements (15.1, 15.2, 15.1', 15.2') is angled over in a hook-shaped manner and the other is of pin-shaped design.

3. Stop (11, 11') according to one of the preceding claims, wherein at least one of the holding elements (15.1, 15.2, 15.1', 15.2') is designed to be so flexible that a plug-in and clamping connection is made possible.

4. Stop (11, 11') according to Claim 3, wherein the flexible holding element (15.1, 15.2) is formed from a flexible material.

5. Stop (11, 11') according to Claim 3, wherein the flexible holding element (15.1, 15.2, 15.1', 15.2') is designed to be flexible, at least on the outer side.

6. Stop (11, 11') according to one of the preceding claims, wherein at least one of the holding elements (15.1, 15.2, 15.1', 15.2') is designed to be profiled on the outer side.

7. Stop (11, 11') according to one of the preceding claims, wherein the fixing element (13) is designed as an omega spring.

8. Stop (11, 11') according to one of the preceding Claims 1 to 7, wherein the fixing element (13') is irreversibly arrangeable in a receptacle (15.6') of the stop element (15').

9. Stop (11, 11') according to one of the preceding claims, wherein the fixing element (13') has at least one depression (13.3) and the stop element (15') correspondingly has at least one protrusion (15.9), or vice versa.

10. Longitudinally adjustable pair of rails (3, 3'), comprising at least one stop (11, 11') according to one of Claims 1 to 9.

11. Pair of rails (3, 3') according to Claim 10, wherein the stop (11) is arrangeable in a positionable and automatically fixable manner on a rail (5, 5', 7, 7') of the pair of rails (3, 3'), wherein holding elements (15.1, 15.2, 15.1', 15.2') of the stop (11) engage horizontally in the rail (5, 5') for the pre-positioning and automatic fixing of the stop (11).

12. Pair of rails (3, 3') according to Claim 10 or 11, wherein the stop (11, 11') is releasably arrangeable in an interior space between the rails (5, 5', 7, 7') of the pair of rails (3, 3').

## Revendications

1. Butée (11, 11'), en particulier butée de fin de course pour un dispositif de réglage en longueur, comportant un élément de butée (15, 15') qui peut être positionné de manière variable et est réalisé de telle sorte qu'il est fixé automatiquement dans une position de retenue,
- l'élément de butée (15, 15') étant réalisé sous la forme d'un élément de positionnement et de fixation combiné,
- l'élément de butée (15, 15') comportant au moins deux éléments de retenue (15.1, 15.2, 15.1', 15.2') faisant saillie pour le pré-positionnement et la fixation automatique dans la position de retenue, et
- un élément de fixation (13, 13') séparé étant prévu, 1' élément de fixation (13, 13') fixant l'élément de butée (15, 15') dans la position de retenue en plus de la fixation automatique, l'élément de de fixation (13) étant réalisé sous la forme d'un ressort de retenue.

2. Butée (11, 11') selon la revendication 1, au moins l'un des éléments de retenue (15.1, 15.2, 15.1', 15.2') étant coudé en forme de crochet et l'autre étant réalisé en forme de broche ou de cheville.

3. Butée (11, 11') selon l'une des revendications précédentes, au moins l'un des éléments de retenue (15.1, 15.2, 15.1', 15.2') étant réalisé de manière flexible de telle sorte qu'une liaison par enfichage et par serrage soit rendue possible.

4. Butée (11, 11') selon la revendication 3, l'élément de retenue (15.1, 15.2) flexible étant formé à partir d'une matière flexible.

5. Butée (11, 11') selon la revendication 3, l'élément de retenue (15.1, 15.2, 15.1', 15.2') flexible étant réalisé de manière flexible au moins du côté extérieur.

6. Butée (11, 11') selon l'une des revendications précédentes, au moins l'un des éléments de retenue (15.1, 15.2, 15.1', 15.2') étant réalisé de manière profilée du côté extérieur.

7. Butée (11) selon l'une des revendications précédentes, l'élément de fixation (13) étant réalisé sous la forme d'un ressort en oméga.

8. Butée (11, 11') selon l'une des revendications précédentes 1 à 7, l'élément de fixation (13') pouvant être disposé de manière irréversible dans un logement (15.6') de l'élément de butée (15').

9. Butée (11, 11') selon l'une des revendications précédentes, l'élément de fixation (13') comprenant au moins un évidement (13.3) et l'élément de butée (15') comprenant au moins un bombement (15.9) de manière correspondante ou inversement.

10. Paire de rails (3, 3') réglable en longueur, comportant au moins une butée (11, 11') selon l'une des revendications 1 à 9.

11. Paire de rails (3, 3') selon la revendication 10, la butée (11) pouvant être disposée de manière à pouvoir être positionnée et fixée automatiquement sur un rail (5, 5', 7, 7') de la paire de rails (3, 3'), des éléments de retenue (15.1, 15.2, 15.1', 15.2') de la butée (11) venant en prise horizontalement dans le rail (5, 5') pour le pré-positionnement et la fixation automatique de la butée (11).

12. Paire de rails (3, 3') selon la revendication 10 ou 11, la butée (11, 11') pouvant être disposée de manière amovible dans un espace intérieur entre les rails (5, 5', 7, 7') de la paire de rails (3, 3').
